# NEUE EUROPÄISCHE PATENTSCHRIFT

(11) **EP 1 904 322 B2**
(45) Veröffentlichungstag und Bekanntmachung des Hinweises auf die Entscheidung über den Einspruch: **03.07.2013**
(45) Hinweis auf die Patenterteilung: 21.04.2010
(21) Anmeldenummer: 06791294.9
(22) Anmeldetag: 28.06.2006
(51) Int. Cl.: B60J 1/20, B60J 7/00

(54) **ROLLOANORDNUNG FÜR EIN KRAFTFAHRZEUG**
BLIND ASSEMBLY FOR A MOTOR VEHICLE
ENSEMBLE STORE POUR UN VEHICULE A MOTEUR

(30) Priorität: 30.06.2005 DE 102005030973
(43) Veröffentlichungstag der Anmeldung: 02.04.2008
(73) Patentinhaber: Webasto AG, 82131 Stockdorf (DE)
(72) Erfinder: OERKE, Philipp, 81479 München (DE); ROCKELMANN, Andreas, 81249 München (DE); GLASL, Sebastian, 81549 München (DE)
(74) Vertreter: advotec.
(86) Internationale Anmeldenummer: PCT/DE2006/001114
(87) Internationale Veröffentlichungsnummer: WO 2007/003165

(56) Entgegenhaltungen:
- EP-A1- 1 188 591
- EP-A2- 0 147 843
- EP-A2- 1 393 939
- DD-A1- 274 642
- DE-A1- 4 041 341
- DE-A1- 10 306 951
- DE-C1- 10 204 558
- US-A- 5 201 563
- US-A- 5 551 744

## Beschreibung

Die vorliegende Erfindung betrifft Rolloanordnung für ein Kraftfahrzeug gemäß dem Oberbegriff der Anspruche 1 bis 5.

Rolloanordnungen der vorgenannten Art können in einem Kraftfahrzeug beispielsweise als Sonnenrollos Verwendung finden. Insbesondere kann dabei die Rollobahn an einem ihrer Längsenden auf eine Wickelwelle aufrollbar sein. Alternativ dazu ist auch denkbar, dass die Rollbahn nicht aufrollbar ist, sondern als Ganzes in Längsrichtung verschiebbar ist. Bei derartigen Rolloanordnungen besteht die Möglichkeit, dass die Führungen über ihre Längserstreckung einen, wenn auch nur minimal unterschiedlichen Abstand zueinander aufweisen, der beispielsweise Folge von Fertigungstoleranzen ist. Dieser gegebenenfalls unterschiedliche Abstand wird zumeist durch die Wahl eines flexiblen Materials für die Rollobahn ausgeglichen. Dadurch ist jedoch unter Umständen der Hersteller in der optischen Gestaltung der Rollobahn eingeschränkt.

Eine weitere Rolloanordnung ist aus der deutschen Offenlegungsschrift DE 100 19 787 A1 bekannt. Bei der darin beschriebenen Rolloanordnung wird als Rollobahn ein biegeschlaffer Stoff verwendet. Die seitlichen Führungen sind als C- förmige Führungsschienen ausgebildet, in denen zur Führung der Rollbahn Gleitkörper beweglich gehaltert sind. In Querrichtung der Rollobahn ist jeweils zwischen der Rollobahn und den Gleitkörpern ein elastisches Element vorgesehen, das eine Anpassung des Verbundes aus Rollobahn, elastischem Element und Gleitkörper an sich unter Umständen in Längsrichtung der Rollobahn ändernde Abstände der Führungen ermöglicht. Weiterhin muss bei einer derartigen Rolloanordnung die Rollbahn als solche nicht in Querrichtung elastisch sein, so dass die optische Gestaltung der Rollobahn durch das verwendete Material vergleichsweise frei wählbar ist.

Eine Rolloanordnung der einleitend genannten Gattung ist aus der Druckschrift EP 1 188 591 A1 bekannt und umfasst eine Rollobahn, die in einer Längsrichtung ausziehbar oder bewegbar ist, zwei Führungen, die sich in Längsrichtung der Rollobahn erstrecken und in Querrichtung der Rollobahn zueinander beabstandet sind und zwischen denen die Rollobahn geführt ist, sowie Dehnungsmittel, die Teil der Rollobahn sind und zumindest in Querrichtung der Rollobahn gedehnt werden können oder eine Dehnung der Rollobahn in Querrichtung ermöglichen. Die Dehnungsmittel sind in Form von dehnelastischen Kunstfasern ausgebildet.

Aus der Druckschrift US 5,201,563 ist eine Rolloanordnung für eine Windschutzscheibe eines Kraftfahrzeuges bekannt, die eine Rollobahn umfasst, die in seitlichen Führungsschienen geführt ist. Die Rollobahn hat elastische Bänder, die sich in Ausziehrichtung, das heißt in Längsrichtung erstrecken und ein Dehnen der Rollobahn quer zur Ausziehrichtung ermöglichen.

Eine weitere Rolloanordnung ist aus der deutschen Offenlegungsschrift DE 103 06 951 A1 bekannt. Bei der darin beschriebenen Rolloanordnung kann die Rollobahn als solche aus zwei verschiedenen Materialien bestehen, nämlich aus einem elastischen und einem unelastischen Material. Dadurch ergeben sich ähnliche Eigenschaften wie bei der zuerst erwähnten Offenlegungsschrift.

Das der vorliegenden Erfindung zugrunde liegende Problem ist die Schaffung einer Rolloanordnung der eingangs genannten Art, die effektiver und/oder einfacher gestaltet ist.

Dies wird erfindungsgemäß durch eine Rolloanordnung der eingangs genannten Art mit den kennzeichnenden Merkmalen eines der Ansprüche 1 bis 5.

Die Dehnungsmittel können aus Kunststoff bestehen oder Kunststoff umfassen. Diese Materialwahl bietet vielfältige Möglichkeiten der Ausbildung der Dehnungsmittel.

Beispielsweise kann dabei vorgesehen sein, dass die Rollobahn auf mindestens einer ihrer den Führungen zugewandten Seiten, zumindest abschnittsweise mit den Dehnungsmitteln verbunden ist.

Die Rollobahn kann in Querrichtung zwei zumindest abschnittsweise voneinander beabstandete Segmente aufweisen, wobei die Dehnungsmittel zumindest abschnittsweise zwischen den beiden Segmenten angeordnet sind. Dadurch kann an einer beliebigen Stelle die Rollobahn mit einer beispielsweise elastischen Unterbrechung versehen werden. Die Anbindung der Rollobahn an die Führungen wird dabei von dem Vorhandensein der Dehnungsmittel nicht beeinträchtigt.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: eine schematische Schnittansicht einer ersten Ausführungsform einer Rolloanordnung;
- Fig. 2: eine schematische Schnittansicht einer zweiten Ausführungsform einer Rolloanordnung;
- Fig. 3: eine Draufsicht auf eine Naht einer Rolloanordnung;
- Fig.4: eine Draufsicht auf eine weitere Ausführungsform einer Naht einer Rolloanordnung;
- Fig. 5a: eine Draufsicht auf einen Abschnitt einer Rollobahn;
- Fig. 5b: eine Draufsicht auf den Abschnitt gemäß Figur 5a bei Dehnung in Querrichtung;
- Fig. 6: eine schematische Draufsicht auf eine weitere Ausführungsform einer Rolloanordnung;
- Fig. 7: einen Schnitt gemäß den Pfeilen VII - VII in Figur 6;
- Fig. 8: einen Fig. 7 entsprechenden Schnitt durch eine weitere Ausführungsform eines Zugspriegels einer erfindungsgemäßen Rolloanordnung;
- Fig. 9: einen Fig. 7 entsprechenden Schnitt durch eine weitere Ausführungsform eines Zugspriegels einer erfindungsgemäßen Rolloanordnung;
- Fig. 10: einen Fig. 7 entsprechenden Schnitt durch eine weitere Ausführungsform eines Zugspriegels einer erfindungsgemäßen Rolloanordnung;
- Fig. 11: eine schematische Draufsicht auf eine weitere Ausführungsform einer erfindungsgemäßen Rolloanordnung;
- Fig. 12: einen Fig. 7 entsprechenden Schnitt durch eine weitere Ausführungsform eines Zugspriegels einer erfindungsgemäßen Rolloanordnung;
- Fig. 13: einen Schnitt gemäß den Pfeilen XIII - XIII in Figur 12.

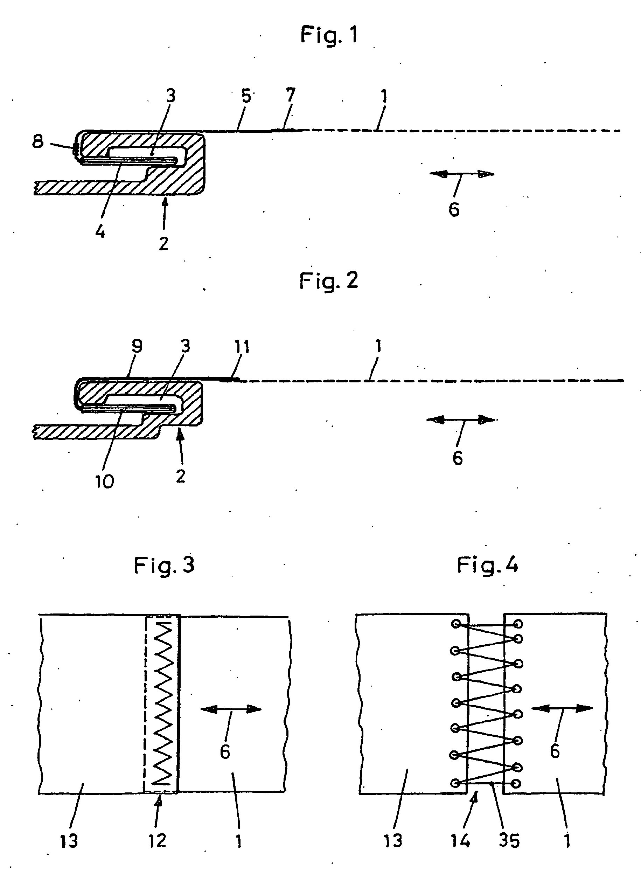

Die aus Figur 1 ersichtliche Ausführungsform einer Rolloanordnung umfasst eine Rollobahn 1, die beispielsweise aus einem biegeschlaffen textilen Material bestehen kann. Die in Figur 1 abgebildete Rolloanordnung umfasst weiterhin zwei Führungen 2, von denen in Fig. 1 nur eine abgebildet ist. Die Führungen 2 sind in dem abgebildeten Ausführungsbeispiel als im weitesten Sinne C-Profile ausgebildet und weisen eine Ausnehmung 3 auf, in die ein Führungselement 4 hineinragen kann. Die Rollobahn 1 ist mit dem Führungselement 4 über ein Teil 5 verbunden, das Teil der Dehnungsmittel sein kann. In Querrichtung 6 der Rollobahn 1 (siehe Pfeil mit dem Bezugszeichen 6) schließen sich somit an die Rollobahn 1 an jeder Seite Teile 5 an, die an ihrem von der Rollobahn 1 abgewandten Ende mit jeweils einem Führungselement 4 verbunden sind, das in eine entsprechende Aussparung 3 der jeweiligen Führung 2 hineinragt. Auf diese Weise kann die Rollobahn 1 zwischen den Führungen 2 in Fahrzeuglängsrichtung (in die Zeichenebene der Figur 1 hinein bzw. aus dieser heraus) bewegt werden.

Es besteht die Möglichkeit, dass das Teil 5 elastisch ausgebildet ist, zum Beispiel als Gummiband oder ähnliches Teil. Alternativ oder zusätzlich dazu besteht die Möglichkeit, dass die Verbindungsstelle zwischen dem Teil 5 und der Rollobahn 1 elastisch ausgebildet ist. In Figur 1 ist eine Naht 7 abgebildet; die das Teil 5 mit der Rollobahn 1 verbindet. Diese Naht 7 kann in Querrichtung 6 der Rollobahn 1 elastisch ausgebildet sein. Alternativ oder zusätzlich dazu besteht die Möglichkeit, dass die Verbindung zwischen Teil 5 und Führungselement 4 ebenfalls elastisch ausgebildet ist, insbesondere ebenfalls als Naht 8.

Es besteht die Möglichkeit, dass aus Figur 1 ersichtliche insbesondere elastische Teil 5 nicht an den in Querrichtung 6 äußeren Rändern der Rollobahn 1 vorzusehen, sondern beispielsweise die Rollobahn 1 in Querrichtung in zwei voneinander separierte Segmente zu teilen, zwischen denen sich ein elastisches Teil, wie beispielsweise das elastische Teil 5, erstreckt. Auch auf diese Weise wird eine Dehnungselastizität in Querrichtung 6 erreicht, ohne dass der eigentliche Stoff der Rollobahn 1 in Querrichtung dehnungselastisch sein muss.

Bei der aus Figur 2 ersichtlichen Ausführungsform einer Rolloanordnung sind gleiche Teile mit gleichen Bezugszeichen versehen wie in Figur 1.

Die Rollobahn 1 ist dabei an ihrer in Querrichtung äußeren Seite mit einem aus zwei Komponenten 9, 10 bestehenden Dehnungsmittel verbunden. Bei dem zweikomponentigen Dehnungsmittel kann es sich um ein Kunststoffteil handeln. Die sich direkt an die Rollobahn 1 anschließende Komponente 9 ist dabei in Querrichtung 6 der Rollobahn 1 elastisch, wo hingegen die sich an die erste Komponente 9 anschließende zweite Komponente 10 vergleichsweise hart beziehungsweise unelastisch in Querrichtung 6 der Rollobahn 1 ist. Diese zweite Komponente 10 ist in dem abgebildeten Ausführungsbeispiel so ausgebildet, dass sie als Führungselement dient, dass in die Aussparung 3 der Führung 2 eingreifen kann.

Figur 2 ist entnehmbar, dass die Dicke der ersten Komponente 9 deutlich geringer ist als die Dicke der zweiten Komponente 10. Auf diese Weise kann bei Verwendung des gleichen Materials für die erste Komponente 9 und die zweite Komponente 10 erreicht werden, dass die erste Komponente 9 zugelastisch in Querrichtung 6 ist, wo hingegen die zweite Komponente 10 auf Grund ihrer Materialdicke so gut wie keine Zugelastizität aufweist.

Auch in dem in Figur 2 abgebildeten Ausführungsbeispiel besteht die Möglichkeit, das zweikomponentige Dehnungsmittel mit der Rollobahn 1 über eine als Naht 11 ausgebildete Verbindung aneinander zu befestigen. Trotzdem sind natürlich auch andere Verbindungsmöglichkeiten zwischen der Rollobahn 1 und dem Dehnungsmittel möglich, wie beispielsweise Klebverbindungen oder dergleichen.

Aus Figur 3 ist detailliert eine Naht 12 ersichtlich, über die die Rollobahn 1 mit einem weiteren Teil 13 in Querrichtung 6 der Rollobahn 1 verbunden ist. Auf Grund der Tatsache, dass die Naht 12 als solche in Querrichtung 6 elastisch ist, muss das Teil 13 nicht elastisch sein, um eine Dehnungselastizität in Querrichtung 6 der Rollobahn 1 zu ermöglichen. Beispielsweise kann es sich bei dem Teil 13 um einen Teil eines Führungselementes handeln. Es besteht natürlich auch die Möglichkeit, dass das Teil 13 ein in Querrichtung 6 elastisches Teil, wie beispielsweise die erste Komponente 9 gemäß Figur 2 oder ein elastisches Teil wie das Teil 5 gemäß Figur 1 ist.

Die Elastizität der Naht 12 kann durch die Nahtkonstruktion als solche bewirkt werden. Es besteht auch die Möglichkeit, für die Erstellung der Naht 12 elastische Garne zu verwenden. Alternativ oder zusätzlich dazu besteht auch die Möglichkeit, sowohl eine elastische Nahtkonstruktion als auch elastische Garne zu verwenden. Bei der in Figur 3 abgebildeten Naht 12 überlappen sich die Rollobahn 1 und das mit ihr in Querrichtung 6 verbundene Teil 13 im Bereich der Naht.

Bei der in Figur 4 abgebildeten alternativen Naht 14 zwischen der Rollobahn 1 und dem Teil 13 sind die Rollobahn 1 und das Teil 13 in Querrichtung 6 voneinander beabstandet. Auf diese Weise erstreckt sich zwischen den beiden einander zugewandten Enden der Rollobahn 1 und des Teils 13 ein Faden 35 der Naht 14. Die Dehnungselastizität der Rolloanordnung in Querrichtung 6 wird durch den variablen Abstand zwischen der Rollobahn 1 und dem Teil 13 gewährleistet. Insbesondere kann auch hier eine elastische Nahtkonstruktion oder ein elastischer Faden 35 Verwendung finden. Es besteht auch die Möglichkeit, den Faden 35 erst nach Einbau der Rollobahn 1 in die Rolloanordnung zwischen dem Teil 13 und der Rollobahn 1 zu spannen, um auf diese Weise eine optimale Naht 14 zu erzielen.

Eine weitere Möglichkeit zur Erzielung oder Verstärkung der Dehnungselastizität in Querrichtung der Rollobahn 1 liegt in einer entsprechenden Ausgestaltung der Verbindung zwischen Rollobahn 1 und beispielsweise dem Teil 5 in Figur 1. Insbesondere durch eine auch aus Figur 2 beziehungsweise aus Figur 3 ersichtliche Überlappung von Rollobahn 1 und Teil 5 oder Teil 13 kann die Dehnungselastizität bewirkt oder vergrößert werden. Dabei kann insbesondere das mit der Rollobahn 1 über den Überlapp verbundene Teil 5, 13 elastisch sein. In dem überlappten Bereich kann, wie dies beispielsweise in Figur 2 oder Figur 3 ersichtlich ist, die Rollobahn 1 mit dem Teil 5, 13 über eine Naht oder über Klebstoff verbunden sein.

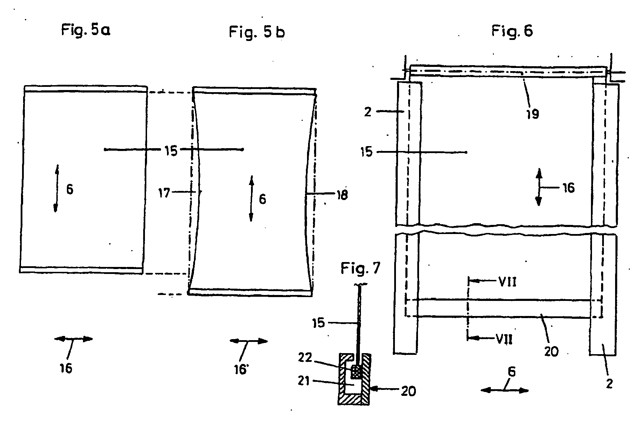

Die aus Figur 5a und Figur 5b ersichtliche Rollobahn 15 ist derart gestaltet, dass sie eine Dehnung in Querrichtung 6 (vertikale Richtung in Figur 5a und Figur 5b) durch eine Stauchung in Längsrichtung 16 (siehe entsprechenden Pfeil in Figur 5b) ermöglicht. Diese Stauchung in Längsrichtung 16 ist in Figur 5b durch Taillierungen 17, 18 an den Längsenden der Rollobahn 15 angedeutet.

In Figur 6 ist ein Ausführungsbeispiel einer Rolloanordnung abgebildet, bei der die in Figur 5a und Figur 5b verdeutlichte Eigenschaft des Stoffes der Rollobahn 15 umgesetzt wird. Figur 6 zeigt die Rollobahn 15, die sich in Querrichtung 6 zwischen den beiden Führungen 2 erstreckt. Auf der in Längsrichtung 16 rechten Seite der Rollobahn 15 ist schematisch eine Wickelwelle 19 angedeutet, auf die die Rollobahn 15 aufgerollt werden kann. Auf der von der Wickelwelle 19 abgewandten Seite der Rollobahn 15 ist ein Zugspriegel 20 angeordnet, der sich in Querrichtung 6 der Rollobahn 15 erstreckt. Der Zugspriegel 20 greift dabei mit seinen querrichtungsseitigen Enden in die Führungen 2 beziehungsweise in die in Figur 6 nicht abgebildeten Ausnehmungen 3 der Führungen 2 ein.

Um eine Stauchung der Rollobahn 15 in Längsrichtung 16 zu ermöglichen, kann beispielsweise der Zugspriegel 20 in Längsrichtung 16 durchbiegbar sein. Alternativ dazu besteht auch die Möglichkeit, dass die Rollobahn 15 quasi schwimmend mit dem Zugspriegel 20 verbunden ist. Figur 7 zeigt eine beispielhafte Verbindungsmöglichkeit zwischen der Rollobahn 15 und dem Zugspriegel 20. Dabei weist der Zugspriegel 20 eine Ausnehmung 21 für den Eingriff eines Keders 22 auf, der an dem in Figur 6 unteren Ende der Rollobahn 15 angebracht ist. Die Ausnehmung 21 ist insbesondere in Längsrichtung 16 größer als der Keder 22, so dass dieser sich in Längsrichtung 16 in dem Zugspriegel 20 bewegen kann. Auf diese Weise kann insbesondere bei biegeelastischer Ausbildung des Keders 22 die Rollobahn 15 in Längsrichtung 16 gestaucht werden, um eine Dehnung in Querrichtung 6 zu ermöglichen. Unter Umständen kann auch der Keder 22 in Längsrichtung 16 in der Ausnehmung 21 vorgespannt sein.

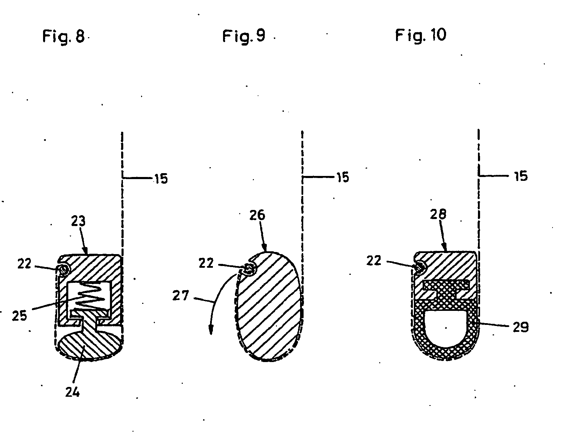

Fig. 8 zeigt einen Zugspriegel 23, bei dem der Keder 22 in einer Ausnehmung an der in Fig. 8 linken Seite des Zugspriegels 23 aufgenommen ist. Von dem Keder 22 erstreckt sich die Rollobahn 15 um die in Fig. 8 die linke, die untere und die rechte Seite des Zugspriegels 23 herum. An der in Fig. 8 unteren Seite des Zugspriegels 23 ist ein nachgiebiges Element 24 angeordnet, das aufgrund einer in dem Zugspriegel 23 vorgesehenen Feder 25 ein Stück weit in den Zugspriegel 23 hinein gedrückt werden kann. Durch das Hineindrücken des nachgiebigen Elementes 24 in den Zugspriegel 23 wird der Weg der Rollobahn 15 um den Zugspriegel verkürzt, so dass die für die Querdehnung notwendige Stauchung in Längsrichtung 16 auftritt.

Es besteht alternativ auch die Möglichkeit, das nachgiebige Element 24 auf der linken oder der rechten Seite des Zugspriegels 23 anzuordnen. Wesentlich ist lediglich, dass das nachgiebige Element bei Anspannung der Rollobahn 15 nachgeben kann, beispielsweise durch eine Bewegung in den Zugspriegel 23 hinein.

Fig. 9 zeigt einen Zugspriegel 26, der drehbar im Gegenuhrzeigersinn beziehungsweise in Richtung des Pfeils 27 in Fig. 9 ist. Auch bei dieser Ausführungsform ist der Keder 15 auf der linken Seite des Zugspriegels 26 in einer Ausnehmung angeordnet, wobei sich auch hier die Rollobahn 15 von der Ausnehmung im Gegenuhrzeigersinn beziehungsweise in Richtung des Pfeils 27 um den Zugspriegel 26 herum erstreckt bis zu dessen rechter Seite in Fig. 9. Durch die Drehbarkeit des Zugspriegels 26 in Richtung des Pfeils 27 kann ebenfalls die Rollbahn 15 bei Querdehnung in Längsrichtung 16 verkürzt beziehungsweise gestaucht werden.

Fig. 10 zeigt einen Zugspriegel 28, der ein als elastisches Hohlprofil 29 ausgebildetes nachgiebiges Element aufweist. Es kann sich dabei beispielsweise um ein aus Gummi bestehendes Hohlprofil 29 handeln. Auch bei dieser Ausführungsform ist der Keder 22 in einer beispielsweise seitlichen oder oberen oder unteren Ausnehmung angeordnet, wobei sich ausgehend von dieser Ausnehmung die Rollbahn 15 um das Hohlprofil 29 herum erstreckt. Aufgrund der Deformierbarkeit des Hohlprofils 29 kann ebenfalls die Rollobahn 15 in Längsrichtung 16 verkürzt beziehungsweise gestaucht werden, so dass eine Dehnung in Querrichtung 6 ermöglicht wird.

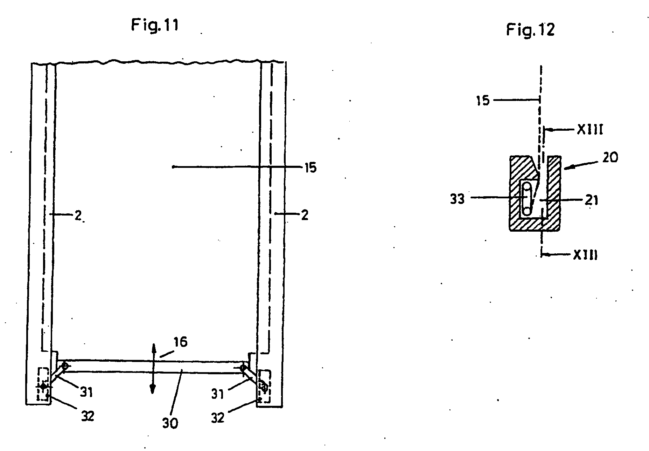

Fig. 11 zeigt eine Rolloanordnung bei der der Zugspriegel 30 über schwenkbare Halteelemente 31 mit Führungselementen 32 für die Führung des Zugspriegels 30 in den Führungen 2 verbunden ist. Falls eine Verkürzung beziehungsweise Stauchung der Rollobahn 15 in Längsrichtung notwendig ist, kann dies durch ein Verschwenken der zugspriegelseitigen Enden der Halteelemente 31 nach oben in Fig. 11 erreicht werden.

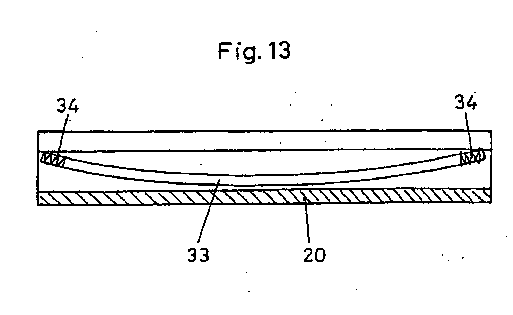

Ein Ausführungsbeispiel eines biegeelastischen Keders 33 ist aus Fig. 12 und Fig. 13 ersichtlich. Der Keder 33 ist dabei durch Fixierelemente 34 vorgespannt, so dass der mittlere, von den Führungen 2 beabstandete Bereich des Keders 33 weiter in Längsrichtung 16 von der Wickelwelle 19 beabstandet ist als der zu den Führungen 2 benachbarte Bereich des Keders 33. Eine Stauchung der Rollobahn 15 in Längsrichtung 16 kann dabei durch Bewegung des mittleren Bereichs in Längsrichtung 16 zur Wickelwelle 19 hin erfolgen.

### Bezugszeichenliste

- 1, 15: Rollobahn
- 2: Führung
- 3: Ausnehmung in 2
- 4: Führungselement
- 5: mit Rollobahn 1 verbundenes Teil
- 6: Querrichtung der Rollobahn 1, 15
- 7, 8, 11, 12, 14: Naht
- 9: erste Komponente
- 10: zweite Komponente
- 13: mit der Rollobahn 1 verbundenes Teil
- 16: Längsrichtung der Rollobahn 1, 15
- 17, 18: Taillierungen der Rollobahn 1, 15
- 19.: Wickelwelle
- 20, 23, 26, 28, 30: Zugspriegel
- 21: Ausnehmung in 20
- 22, 33: Keder
- 24: nachgiebiges Element
- 25: Feder
- 27: Drehrichtung
- 29: elastisches Hohlprofil
- 31: schwenkbare Halteelemente
- 32: Führungselement
- 34: Fixierelemente
- 35: Faden

## Patentansprüche

1. Rolloanordnung für ein Kraftfahrzeug, umfassend
- eine Rollobahn (1, 15), die in einer Längsrichtung (16) ausziehbar oder bewegbar ist;
- zwei Führungen (2), die sich in Längsrichtung (16) der Rollobahn (1, 15) erstrecken und in Querrichtung (6) der Rollobahn (1, 15) zueinander beabstandet sind, wobei zwischen den Führungen (2) die Rollobahn (1, 15) geführt werden kann;
- Dehnungsmittel, die Teil der Rollobahn (1, 15) sind oder mit der Rollobahn (1, 15) verbunden sind, wobei die Dehnungsmittel zumindest in Querrichtung (6) der Rollobahn (1, 15) gedehnt werden können oder eine Dehnung der Rollobahn (1, 15) in Querrichtung (6) ermöglichen;
**dadurch gekennzeichnet, dass** die Dehnungsmittel durch eine in Längsrichtung (16) flexible oder flexibel an mindestens einem von der Rolloanordnung umfassten Zugelement befestigte Rollobahn realisiert sind, die eine Dehnung in Querrichtung (6) durch eine zumindest abschnittsweise Stauchung in Längsrichtung kompensiert, wobei das mindestens eine Zugelement als mit den Führungen (2) zusammenwirkender Zugspriegel (23) ausgebildet ist, wobei
der Zugspriegel (23) elastisch ist und ein nachgiebiges Element (24) umfasst, um das die Rollobahn (15) zumindest teilweise herum geführt ist, so dass durch Deformation des nachgiebigen Elementes (24) oder Hineinbewegen des nachgiebigen Elementes (24) in den Zugspriegel (23) der das nachgiebige Element (24) umgebende Abschnitt der Rollobahn (15) verkürzt werden kann, wobei das nachgiebige Element (24) an einer Feder (25) anliegt, die in dem Zugspriegel (23) angeordnet ist.

2. Rolloanordnung für ein Kraftfahrzeug, umfassend
- eine Rollobahn (1, 15), die in einer Längsrichtung (16) ausziehbar oder bewegbar ist;
- zwei Führungen (2), die sich in Längsrichtung (16) der Rollobahn (1,15) erstrecken und in Querrichtung (6) der Rollobahn (1, 15) zueinander beabstandet sind, wobei zwischen den Führungen (2) die Rollobahn (1, 15) geführt werden kann;
- Dehnungsmittel, die Teil der Rollobahn (1, 15) sind oder mit der Rollobahn (1, 15) verbunden sind, wobei die Dehnungsmittel zumindest in Querrichtung (6) der Rollobahn (1, 15) gedehnt werden können oder eine Dehnung der Rollobahn (1, 15) in Querrichtung (6) ermöglichen;
**dadurch gekennzeichnet, dass** die Dehnungsmittel durch eine in Längsrichtung (16) flexible oder flexibel an mindestens einem von der Rolloanordnung umfassten Zugelement befestigte Rollobahn realisiert sind, die eine Dehnung in Querrichtung (6) durch eine zumindest abschnittsweise Stauchung in Längsrichtung kompensiert, wobei das mindestens eine Zugelement als mit den Führungen (2) zusammenwirkender Zugspriegel (28) ausgebildet ist, wobei
- der Zugspriegel (28) elastisch ist und ein nachgiebiges Element (24) umfasst, um das die Rollobahn (15) zumindest teilweise herum geführt ist, so dass durch Deformation des nachgiebigen Elementes (24) oder Hineinbewegen des nachgiebigen Elementes (24) in den Zugspriegel (28) der das nachgiebige Element (24) umgebende Abschnitt der Rollobahn (15) verkürzt werden kann, wobei das nachgiebige Element (24) als elastisches Hohlprofil ausgebildet ist, das an dem Zugspriegel (28) befestigt ist.

3. Rolloanordnung für ein Kraftfahrzeug, umfassend
- eine Rollobahn (1, 15), die in einer Längsrichtung (16) ausziehbar oder bewegbar ist;
- zwei Führungen (2), die sich in Längsrichtung (16) der Rollobahn (1, 15) erstrecken und in Querrichtung (6) der Rollobahn (1, 15) zueinander beabstandet sind, wobei zwischen den Führungen (2) die Rollobahn (1, 15) geführt werden kann;
- Dehnungsmittel, die Teil der Rollobahn (1, 15) sind oder mit der Rollobahn (1, 15) verbunden sind, wobei die Dehnungsmittel zumindest in Querrichtung (6) der Rollobahn (1, 15) gedehnt werden können oder eine Dehnung der Rollobahn (1, 15) in Querrichtung (6) ermöglichen;
**dadurch gekennzeichnet, dass** die Dehnungsmittel durch eine in Längsrichtung (16) flexible oder flexibel an mindestens einem von der Rolloanordnung umfassten Zugelement befestigte Rollobahn realisiert sind, die eine Dehnung in Querrichtung (6) durch eine zumindest abschnittsweise Stauchung in Längsrichtung kompensiert, wobei das mindestens eine Zugelement als mit den Führungen (2) zusammenwirkender Zugspriegel (20, 23, 26, 28, 30) ausgebildet ist, wobei
der Zugspriegel (26) in Längsrichtung bewegbar ist und um seine Längsachse drehbar ist und wobei die Rollobahn (15) zumindest teilweise um den Zugspriegel (26) herum geführt ist, so dass durch Drehung des Zugspriegels (26) der den Zugspriegel (26) umgebende Abschnitt der Rollobahn (15) verkürzt werden kann.

4. Rolloanordnung für ein Kraftfahrzeug, umfassend
- eine Rollobahn (1, 15), die in einer Längsrichtung (16) ausziehbar oder bewegbar ist;
- zwei Führungen (2), die sich in Längsrichtung (16) der Rollobahn (1, 15) erstrecken und in Querrichtung (6) der Rollobahn (1, 15) zueinander beabstandet sind, wobei zwischen den Führungen (2) die Rollobahn (1, 15) geführt werden kann;
- Dehnungsmittel, die Teil der Rollobahn (1, 15) sind oder mit der Rollobahn (1, 15) verbunden sind, wobei die Dehnungsmittel zumindest in Querrichtung (6) der Rollobahn (1, 15) gedehnt werden können oder eine Dehnung der Rollobahn (1, 15) in Querrichtung (6) ermöglichen;
**dadurch gekennzeichnet, dass** die Dehnungsmittel durch eine in Längsrichtung (16) flexible oder flexibel an mindestens einem von der Rolloanordnung umfassten Zugelement befestigte Rollobahn realisiert sind, die eine Dehnung in Querrichtung (6) durch eine zumindest abschnittsweise Stauchung in Längsrichtung kompensiert, wobei das mindestens eine Zugelement als mit den Führungen (2) zusammenwirkender Zugspriegel (20, 23, 26, 28, 30) ausgebildet ist, wobei
der Zugspriegel (30) in Längsrichtung biegbar ist und über schwenkbare Halteelemente (31) gehaltert ist, so dass er in Längsrichtung (16) der Rollobahn (15) beweglich ist.

5. Rolloanordnung für ein Kraftfahrzeug, umfassend
- eine Rollobahn (1, 15), die in einer Längsrichtung (16) ausziehbar oder bewegbar ist;
- zwei Führungen (2), die sich in Längsrichtung (16) der Rollobahn (1, 15) erstrecken und in Querrichtung (6) der Rollobahn (1, 15) zueinander beabstandet sind, wobei zwischen den Führungen (2) die Rollobahn (1, 15) geführt werden kann;
- Dehnungsmittel, die Teil der Rollobahn (1, 15) sind oder mit der Rollobahn (1, 15) verbunden sind, wobei die Dehnungsmittel zumindest in Querrichtung (6) der Rollobahn (1, 15) gedehnt werden können oder eine Dehnung der Rollobahn (1, 15) in Querrichtung (6) ermöglichen;
**dadurch gekennzeichnet, dass** die Dehnungsmittel durch eine in Längsrichtung (16) flexible oder flexibel an mindestens einem von der Rolloanordnung umfassten Zugelement befestigte Rollobahn realisiert sind, die eine Dehnung in Querrichtung (6) durch eine zumindest abschnittsweise Stauchung in Längsrichtung kompensiert, wobei das mindestens eine Zugelement als mit den Führungen (2) zusammenwirkender Zugspriegel (20, 23, 26, 28, 30) ausgebildet ist, wobei
der Zugspriegel (20) in Längsrichtung biegbar ist und an dem im Bereich des
Zugspriegels (20) angeordneten Ende der Rollobahn (15) an dieser ein Keder (33) angebracht ist, der in Längsrichtung (16) biegbar ist, der durch Fixierelemente (34) vorgespannt ist, so dass der mittlere, von den Führungen (2) beabstandete Bereich des Keders (33) weiter in Längsrichtung von einer Wickelwelle (19) beabstandet ist als der zu den Führungen (2) benachbarte Bereich des Keders (33).

## Claims

1. Blind assembly for a motor vehicle, comprising
- a blind web (1, 15) which is extensible or movable in a longitudinal direction (16);
- two guides (2) which extend in the longitudinal direction (16) of the blind web (1, 15) and are spaced apart from each other in the transverse direction (6) of the blind web (1, 15), wherein the blind web (1, 15) can be guided between the guides (2);
- expanding means which are part of the blind web (1, 15) or are connected to the blind web (1, 15), wherein the expanding means can be expanded at least in the transverse direction (6) of the blind web (1, 15) or permit an expansion of the blind web (1, 15) in the transverse direction (6);
**characterized in that** the expanding means are realized by a blind web which is flexible in the longitudinal direction (16) or is fastened flexibly to at least one tension element surrounded by the blind assembly and which compensates for an expansion in the transverse direction (6) by a compression, at least in some sections, in the longitudinal direction, wherein the at least one tension element is designed as a tension bow (23) which interacts with the guides (2), wherein the tension bow (23) is elastic and comprises a flexible element (24) about which the blind web (15) is at least partially guided, and therefore, by deformation of the flexible element (24) or moving the flexible element (24) into the tension bow (23), that section of the blind web (15) which surrounds the flexible element (24) can be shortened, wherein the flexible element (24) bears against a spring (25) which is arranged in the tension bow (23).

2. Blind assembly for a motor vehicle, comprising
- a blind web (1, 15) which is extensible or movable in a longitudinal direction (16);
- two guides (2) which extend in the longitudinal direction (16) of the blind web (1, 15) and are spaced apart from each other in the transverse direction (6) of the blind web (1, 15), wherein the blind web (1, 15) can be guided between the guides (2);
- expanding means which are part of the blind web (1, 15) or are connected to the blind web (1, 15), wherein the expanding means can be expanded at least in the transverse direction (6) of the blind web (1, 15) or permit an expansion of the blind web (1, 15) in the transverse direction (6);
**characterized in that** the expanding means are realized by a blind web which is flexible in the longitudinal direction (16) or is fastened flexibly to at least one tension element surrounded by the blind assembly and which compensates for an expansion in the transverse direction (6) by a compression, at least in some sections, in the longitudinal direction, wherein the at least one tension element is designed as a tension bow (28) which interacts with the guides (2), wherein the tension bow (28) is elastic and comprises a flexible element (24) about which the blind web (15) is at least partially guided, and therefore, by deformation of the flexible element (24) or moving the flexible element (24) into the tension bow (28), that section of the blind web (15) which surrounds the flexible element (24) can be shortened, wherein the flexible element (24) is designed as an elastic hollow profile which is attached to the tension bow (28).

3. Blind assembly for a motor vehicle, comprising
- a blind web (1, 15) which is extensible or movable in a longitudinal direction (16);
- two guides (2) which extend in the longitudinal direction (16) of the blind web (1, 15) and are spaced apart from each other in the transverse direction (6) of the blind web (1, 15), wherein the blind web (1, 15) can be guided between the guides (2);
- expanding means which are part of the blind web (1, 15) or are connected to the blind web (1, 15), wherein the expanding means can be expanded at least in the transverse direction (6) of the blind web (1, 15) or permit an expansion of the blind web (1, 15) in the transverse direction (6);
**characterized in that** the expanding means are realized by a blind web which is flexible in the longitudinal direction (16) or is fastened flexibly to at least one tension element surrounded by the blind assembly and which compensates for an expansion in the transverse direction (6) by a compression, at least in some sections, in the longitudinal direction, wherein the at least one tension element is designed as a tension bow (20, 23, 26, 28, 30) which interacts with the guides (2), wherein
the tension bow (26) is movable in the longitudinal direction and is rotatable about its longitudinal axis, and wherein the blind web (15) is guided at least partially about the tension bow (26), and therefore, by rotation of the tension bow (26), that section of the blind web (15) which surrounds the tension bow (26) can be shortened.

4. Blind assembly for a motor vehicle, comprising
- a blind web (1, 15) which is extensible or movable in a longitudinal direction (16);
- two guides (2) which extend in the longitudinal direction (16) of the blind web (1, 15) and are spaced apart from each other in the transverse direction (6) of the blind web (1, 15), wherein the blind web (1, 15) can be guided between the guides (2);
- expanding means which are part of the blind web (1, 15) or are connected to the blind web (1, 15), wherein the expanding means can be expanded at least in the transverse direction (6) of the blind web (1, 15) or permit an expansion of the blind web (1, 15) in the transverse direction (6);
**characterized in that** the expanding means are realized by a blind web which is flexible in the longitudinal direction (16) or is fastened flexibly to at least one tension element surrounded by the blind assembly and which compensates for an expansion in the transverse direction (6) by a compression, at least in some sections, in the longitudinal direction, wherein the at least one tension element is designed as a tension bow (20, 23, 26, 28, 30) which interacts with the guides (2), wherein
the tension bow (30) is bendable in the longitudinal direction and is secured via pivotable retaining elements (31) such that it is movable in the longitudinal direction (16) of the blind web (15).

5. Blind assembly for a motor vehicle, comprising
- a blind web (1, 15) which is extensible or movable in a longitudinal direction (16);
- two guides (2) which extend in the longitudinal direction (16) of the blind web (1, 15) and are spaced apart from each other in the transverse direction (6) of the blind web (1, 15), wherein the blind web (1, 15) can be guided between the guides (2);
- expanding means which are part of the blind web (1, 15) or are connected to the blind web (1, 15), wherein the expanding means can be expanded at least in the transverse direction (6) of the blind web (1, 15) or permit an expansion of the blind web (1, 15) in the transverse direction (6);
**characterized in that** the expanding means are realized by a blind web which is flexible in the longitudinal direction (16) or is fastened flexibly to at least one tension element surrounded by the blind assembly and which compensates for an expansion in the transverse direction (6) by a compression, at least in some sections, in the longitudinal direction, wherein the at least one tension element is designed as a tension bow (20, 23, 26, 28, 30) which interacts with the guides (2), wherein
the tension bow (20) is bendable in the longitudinal direction and a piping (33) which is bendable in the longitudinal direction (16) is attached to the blind web (15) at the end thereof which is arranged in the region of the tension bow (20), which piping is preloaded by means of fixing elements (34) such that the central region, which is spaced apart from the guides (2), of the piping (33) is spaced apart in the longitudinal direction from a winding shaft (19) to a greater extent than that region of the piping (33) which is adjacent to the guides (2).

## Revendications

1. Ensemble de store pour un véhicule automobile, comprenant :
- une bande de store (1, 15), qui peut être tirée ou déplacée dans une direction longitudinale (16),
- deux guides (2), qui s'étendent dans la direction longitudinale (16) de la bande de store (1, 15) et qui sont espacés l'un de l'autre dans la direction transversale (6) de la bande de store (1, 15), la bande de store (1, 15) pouvant être guidée entre les guides (2) ;
- des moyens d'étirage qui font partie de la bande de store (1, 15) ou qui sont connectés à la bande de store (1, 15), les moyens d'étirage pouvant être étirés au moins dans la direction transversale (6) de la bande de store (1, 15) ou permettant un étirage de la bande de store (1, 15) dans la direction transversale (6) ;
**caractérisé en ce que** les moyens d'étirage sont réalisés par une bande de store flexible dans la direction longitudinale (16) ou fixée de manière flexible à au moins un élément de traction appartenant à l'ensemble de store, qui compense un étirage dans la direction transversale (6) par une compression au moins partielle dans la direction longitudinale, l'au moins un élément de traction étant réalisé sous forme d'étrier de traction (23) coopérant avec les guides (2),
l'étrier de traction (23) étant élastique et comprenant un élément flexible (24), autour duquel la bande de store (15) est guidée au moins partiellement, de sorte que par déformation de l'élément flexible (24) ou par déplacement vers l'intérieur de l'élément flexible (24) dans l'étrier de traction (23), la portion de la bande de store (15) entourant l'élément flexible (24) puisse être raccourcie, l'élément flexible (24) reposant contre un ressort (25) qui est disposé dans l'étrier de traction (23).

2. Ensemble de store pour un véhicule automobile, comprenant :
- une bande de store (1, 15), qui peut être tirée ou déplacée dans une direction longitudinale (16),
- deux guides (2), qui s'étendent dans la direction longitudinale (16) de la bande de store (1, 15) et qui sont espacés l'un de l'autre dans la direction transversale (6) de la bande de store (1, 15), la bande de store (1, 15) pouvant être guidée entre les guides (2) ;
- des moyens d'étirage qui font partie de la bande de store (1, 15) ou qui sont connectés à la bande de store (1, 15), les moyens d'étirage pouvant être étirés au moins dans la direction transversale (6) de la bande de store (1, 15) ou permettant un étirage de la bande de store (1, 15) dans la direction transversale (6) ;
**caractérisé en ce que** les moyens d'étirage sont réalisés par une bande de store flexible dans la direction longitudinale (16) ou fixée de manière flexible à au moins un élément de traction appartenant à l'ensemble de store, qui compense un étirage dans la direction transversale (6) par une compression au moins partielle dans la direction longitudinale, l'au moins un élément de traction étant réalisé sous forme d'étrier de traction (28) coopérant avec les guides (2),
l'étrier de traction (28) étant élastique et comprenant un élément flexible (24), autour duquel la bande de store (15) est guidée au moins partiellement, de sorte que par déformation de l'élément flexible (24) ou par déplacement vers l'intérieur de l'élément flexible (24) dans l'étrier de traction (28), la portion de la bande de store (15) entourant l'élément flexible (24) puisse être raccourcie, l'élément flexible (24) étant réalisé sous forme de profilé creux élastique qui est fixé sur l'étrier de traction (28).

3. Ensemble de store pour un véhicule automobile, comprenant :
- une bande de store (1, 15), qui peut être tirée ou déplacée dans une direction longitudinale (16),
- deux guides (2), qui s'étendent dans la direction longitudinale (16) de la bande de store (1, 15) et qui sont espacés l'un de l'autre dans la direction transversale (6) de la bande de store (1, 15), la bande de store (1, 15) pouvant être guidée entre les guides (2) ;
- des moyens d'étirage qui font partie de la bande de store (1, 15) ou qui sont connectés à la bande de store (1, 15), les moyens d'étirage pouvant être étirés au moins dans la direction transversale (6) de la bande de store (1, 15) ou permettant un étirage de la bande de store (1, 15) dans la direction transversale (6) ;
**caractérisé en ce que** les moyens d'étirage sont réalisés par une bande de store flexible dans la direction longitudinale (16) ou fixée de manière flexible à au moins un élément de traction appartenant à l'ensemble de store, qui compense un étirage dans la direction transversale (6) par une compression au moins partielle dans la direction longitudinale, l'au moins un élément de traction étant réalisé sous forme d'étrier de traction (20, 23, 26, 28, 30) coopérant avec les guides (2),
l'étrier de traction (26) étant déplaçable dans la direction longitudinale et pouvant tourner autour de son axe longitudinal et la bande de store (15) étant guidée au moins partiellement autour de l'étrier de traction (26), de sorte que par rotation de l'étrier de traction (26), la portion de la bande de store (15) entourant l'étrier de traction (26) puisse être raccourcie.

4. Ensemble de store pour un véhicule automobile, comprenant :
- une bande de store (1, 15), qui peut être tirée ou déplacée dans une direction longitudinale (16),
- deux guides (2), qui s'étendent dans la direction longitudinale (16) de la bande de store (1, 15) et qui sont espacés l'un de l'autre dans la direction transversale (6) de la bande de store (1, 15), la bande de store (1, 15) pouvant être guidée entre les guides (2) ;
- des moyens d'étirage qui font partie de la bande de store (1, 15) ou qui sont connectés à la bande de store (1, 15), les moyens d'étirage pouvant être étirés au moins dans la direction transversale (6) de la bande de store (1, 15) ou permettant un étirage de la bande de store (1, 15) dans la direction transversale (6) ;
**caractérisé en ce que** les moyens d'étirage sont réalisés par une bande de store flexible dans la direction longitudinale (16) ou fixée de manière flexible à au moins un élément de traction appartenant à l'ensemble de store, qui compense un étirage dans la direction transversale (6) par une compression au moins partielle dans la direction longitudinale, l'au moins un élément de traction étant réalisé sous forme d'étrier de traction (20, 23, 26, 28, 30) coopérant avec les guides (2),
l'étrier de traction (30) pouvant être fléchi dans la direction longitudinale et étant retenu par le biais d'éléments de retenue pivotants (31), de sorte qu'il soit déplaçable dans la direction longitudinale (16) de la bande de store (15).

5. Ensemble de store pour un véhicule automobile, comprenant :
- une bande de store (1, 15), qui peut être tirée ou déplacée dans une direction longitudinale (16),
- deux guides (2), qui s'étendent dans la direction longitudinale (16) de la bande de store (1, 15) et qui sont espacés l'un de l'autre dans la direction transversale (6) de la bande de store (1, 15), la bande de store (1, 15) pouvant être guidée entre les guides (2) ;
- des moyens d'étirage qui font partie de la bande de store (1, 15) ou qui sont connectés à la bande de store (1, 15), les moyens d'étirage pouvant être étirés au moins dans la direction transversale (6) de la bande de store (1, 15) ou permettant un étirage de la bande de store (1, 15) dans la direction transversale (6) ;
**caractérisé en ce que** les moyens d'étirage sont réalisés par une bande de store flexible dans la direction longitudinale (16) ou fixée de manière flexible à au moins un élément de traction appartenant à l'ensemble de store, qui compense un étirage dans la direction transversale (6) par une compression au moins partielle dans la direction longitudinale, l'au moins un élément de traction étant réalisé sous forme d'étrier de traction (20, 23, 26, 28, 30) coopérant avec les guides (2),
l'étrier de traction (20) pouvant être fléchi dans la direction longitudinale et un bourrelet (33) étant monté sur la bande de store (15) sur l'extrémité de cette dernière disposée dans la région de l'étrier de traction (20), pouvant être fléchi dans la direction longitudinale (16) et étant précontraint par des éléments de fixation (34) de telle sorte que la région centrale du bourrelet (33) espacée des guides (2) soit davantage espacée, dans la direction longitudinale, d'un arbre d'enroulement (19) que la région du bourrelet (33) adjacente aux guides (2).
